# EUROPÄISCHE PATENTSCHRIFT

(11) **EP 1 777 451 B1**
(45) Veröffentlichungstag und Bekanntmachung des Hinweises auf die Patenterteilung: **05.11.2008**
(21) Anmeldenummer: 06025291.3
(22) Anmeldetag: 06.08.2005
(51) Int. Cl.: F16L 47/04, F16L 19/02, F16L 19/028

(54) **Überwurfmutter aus Kunststoff**
Swivel nut of plastic material
Écrou de raccord en matière plastique

(30) Priorität: 14.08.2004 DE 102004039481; 03.12.2004 DE 102004058252
(43) Veröffentlichungstag der Anmeldung: 25.04.2007
(62) Teilanmeldung aus: 05017173.5
(73) Patentinhaber: PROTECHNA S.A., 1701 Fribourg (CH)
(72) Erfinder:
(74) Vertreter: Pürckhauer, Rolf

(56) Entgegenhaltungen:
- US-A- 4 226 164
- US-A- 4 923 349

## Beschreibung

Die Erfindung betrifft eine Überwurfmutter aus Kunststoff, die aus zwei Mutterhälften auf einem ersten Bauteil zusammengesetzt und auf diesem unverlierbar gehalten wird, wobei die Mutterhälften ein Innengewindesegment und ein nach innen gerichtetes Ringschultersegment zum Angreifen an einem entsprechenden Bund des ersten mit einem zweiten Bauteil zu verschraubenden Bauteils aufweisen, insbesondere zum Anschrauben des Armaturengehäuses einer Entnahmearmatur an dem mit einem Außengewinde versehenen Auslaufstutzen eines Transport- und Lagerbehälters aus Kunststoff oder Metall für Flüssigkeiten und Schüttgut.

Aus der DE 103 01 517 B3 ist ein Transport- und Lagerbehälter für Flüssigkeiten mit einem auf einem palettenartigen Untergestell stehenden Innenbehälter aus Kunststoff und einem äußeren Gitterkorb bekannt. Die Entnahmearmatur des Innenbehälters wird mittels einer unverlierbar auf dem Einlaufstutzen der Armatur angeordneten Überwurfmutter aus Kunststoff der gattungsgemäßen Art, die aus zwei Mutterhälften auf dem Einlaufstutzen zusammengeschweißt wird, an den Auslaufstutzen des Innenbehälters angeschraubt. Bei einer Herstellung der Überwurfmutter aus Aluminium werden die beiden Mutterhälften auf dem Einlaufstutzen der Entnahmearmatur zusammengenietet. Eine derartige unverlierbare Anbringung einer Überwurfmutter auf dem Einlaufstutzen einer Entnahmearmatur ist umständlich und zeitaufwendig und führt zu einer Verteuerung der Herstellungskosten.

Aus der US-A-4923349 ist eine Überwurfmutter aus Kunststoff mit zwei Mutterhälften bekannt, die ein Innengewindesegment und ein nach innen gerichtetes Ringschultersegment zum Angreifen an einem entsprechenden Bund eines ersten mit einem zweiten Bauteil zu verschraubenden Bauteils aufweisen. Im Abstand von den Stoßenden der beiden Mutterhälften sind an diese zwei Haltestege angeformt. Die beiden Mutterhälften werden mittels zweier Klemmbügel miteinander verbunden, die jeweils mit zwei Klemmschenkeln auf die gegenüberliegenden Halterippen von jeweils zwei Stoßenden der beiden Mutterhälften aufgeschoben werden.

Der Erfindung liegt die Aufgabe zugrunde, die gattungsgemäße Überwurfmutter im Hinblick auf eine vereinfachte Montage weiterzuentwickeln.

Diese Aufgabe wird erfindungsgemäß gelöst durch eine Überwurfmutter mit den Merkmalen des Patentanspruchs.

Die erfindungsgemäße Überwurfmutter ist nachstehend anhand von Zeichnungsfiguren erläutert, die folgendes darstellen:
- Fig. 1: eine Längsschnittdarstellung eines Klappenhahns, der mittels einer in den Figuren 2 bis 4 im einzelnen dargestellten Überwurfmutter an den Auslaufstutzen eines Flüssigkeitsbehälters angeschraubt ist, die
- Fign. 2 und 3: perspektivische Darstellungen der getrennten sowie der zusammengesetzten Mutterhälften der zum Anschrauben des Klappenhahns nach Figur 1 verwendeten Überwurfmutter und
- Fig.4: einen Schnitt nach Linie IV-IV der Figur 3.

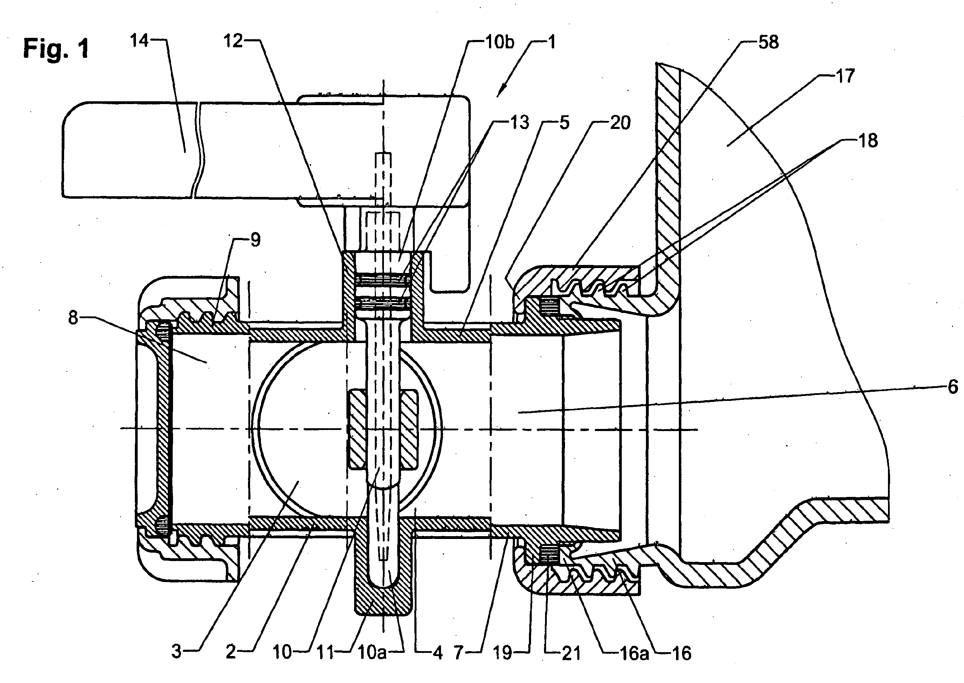

Das aus einem Polyethylen hoher Dichte (PE-HD) hergestellte Hahngehäuse 2 des Klappenhahns 1 nach Fig. 1 nimmt eine Klappenscheibe 3 zum Öffnen und Schließen der zentralen Durchflußöffnung 4 der Gehäusekammer 5 auf, die mit dem Einlaufkanal 6 des Einlaufstutzens 7 und dem Auslaufkanal 8 des Auslaufstutzens 9 des Hahngehäuses 2 in Verbindung steht. Die Klappenscheibe 3 ist exzentrisch an einer Drehwelle 10 befestigt, deren beide Enden 10a, 10b in Lagerstutzen 11, 12 des Hahngehäuses 2 drehbar gelagert sind, wobei das obere Ende 10b der Drehwelle 3 über den Lagerstutzen 12 aus dem Hahngehäuse 2 nach außen vorsteht. Die Drehwelle 10 ist mittels Dichtringen 13 in dem Lagerstutzen 12 nach außen abgedichtet. Auf dem aus dem Hahngehäuse 2 herausragenden Ende 10b der Drehwelle 10 der Klappenscheibe 3 ist ein Handgriff 14 zum Öffnen und Schließen des Klappenhahns 1 angebracht.

Der Klappenhahn 1 ist mittels einer Überwurfmutter 58 aus Kunststoff an dem Auslaufstutzen 16 eines Flüssigkeitsbehälters 17, z.B. eines Kunststoff-Innenbehälters eines Palettenbehälters, befestigt, wobei der Flüssigkeitsbehälter 17 mit dem mit einem Außengewinde 18 versehenen Auslaufstutzen 16 einteilig durch Blasformen hergestellt ist.

Die Überwurfmutter 58 ist zwischen einem Bund 19 des Einlaufstutzens 7 und den Lagerstutzen 11, 12 des Hahngehäuses 2 für die Drehwelle 10 der Klappenscheibe 3 unverlierbar und verschiebbar auf dem Einlaufstutzen des Hahngehäuses 2 gehalten.

Beim Einziehen des Einlaufstutzens 7 des Hahngehäuses 2 in den Auslaufstutzen 16 des Flüssigkeitsbehälters 17 durch das Aufschrauben der auf dem Einlaufstutzen 7 des Hahngehäuses 2 unverlierbar gehaltenen Überwurfmutter 58, die mit einer Ringschulter 20 an dem Bund 19 des Einlaufstutzens 7 angreift, auf dem Auslaufstutzen 16 wird ein auf dem Einlaufstutzen 7 sitzender Dichtring 21 zwischen dem Bund 19 und dem äußeren Ende 16a des Auslaufstutzens 16 des Flüssigkeitsbehälters 17 eingespannt und dadurch das Gehäuse 2 des Klappenhahns 1 gegen den Flüssigkeitsbehälter 17 abgedichtet.

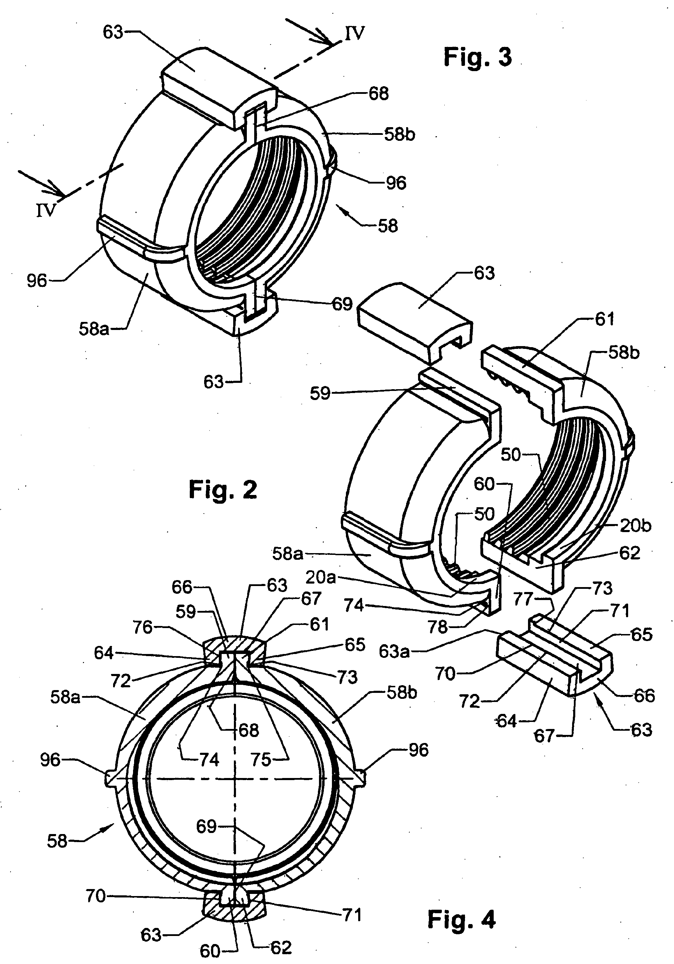

Die Überwurfmutter 58 nach den Figuren 2 bis 4 besteht aus zwei als Kunststoff-Spritzgußteile hergestellten Mutterhälften 58a, 58b mit einem Innengewindesegment 50, einem nach innen gerichteten Ringschultersegment 20a, 20b, an den Enden der Mutterhälften angeformten Stoßleisten 59, 60; 61, 62 sowie zwei Klemmstücken 63 mit einer durch zwei Klemmschenkel 64, 65 und einen Verbindungssteg 66 gebildeten Nut 67 zum Aufschieben auf die Federn 68, 69, die jeweils von zwei Stoßleisten 59, 61 und 60, 62 der zusammengefügten Mutterhälften 58a, 58b gebildet werden.

Zur Sicherung der Klemmstücke 63 gegen Lösen sind an die Innenkanten 70, 71 der Klemmschenkel 64, 65 der Klemmstücke 63 dünne Stege 72, 73 angeformt, die beim Aufschieben der Klemmstücke 63 auf die durch die Stoßleisten 59, 61; 60, 62 der beiden Mutterhälften 58a, 58b gebildeten Federn 68, 69 mit Rillen 74, 75 in den Außenkanten 76 der Stoßleisten 59, 61; 60, 62 in Eingriff gelangen.

Die Stege 72, 73 sind am Aufschiebeende 63a der Klemmstücke 63 zur Bildung eines Anschlags 77 abgebrochen, der mit einem am Ende der Rillen 74, 75 in den Stoßleisten 59, 60; 61, 62 der Mutterhälften 58a, 58b gebildeten Gegenanschlag 78 zur genauen Positionierung der Klemmstücke 63 beim Aufschieben auf die Federn 68, 69 der zusammengefügten Mutterhälften 58a, 58b und zur Sicherung der Klemmstücke 63 zusammenwirken.

Die Überwurfmutter 58 ist auf dem Umfang mit Greifrippen 96 als Montagehilfe versehen.

## Patentansprüche

1. Überwurfmutter (58) aus Kunststoff, die aus zwei Mutterhälften (58a, 58b) auf einem ersten Bauteil zusammengesetzt und auf diesem unverlierbar gehalten wird, wobei die Mutterhälften (58a, 58b) ein Innengewindesegment (50) und ein nach innen gerichtetes Ringschultersegment (20a, 20b) zum Angreifen an einem entsprechenden Bund (19) des ersten mit einem zweiten Bauteil zu verschraubenden Bauteils aufweisen, insbesondere zum Anschrauben des Armaturengehäuses (2) einer Entnahmearmatur (1) an dem mit einem Außengewinde (18) versehenen Auslaufstutzen (16) eines Transport- und Lagerbehälters (17) aus Kunststoff oder Metall für Flüssigkeiten und Schüttgut, **gekennzeichnet durch** zwei Mutterhälften (58a, 58b) mit an den Enden angeformten Stoßleisten (59, 60; 61, 62), zwei Klemmstücke (63) mit einer **durch** zwei Klemmschenkel (64, 65) und einen Verbindungssteg (66) gebildeten Nut (67) zum Aufschieben auf Federn (68, 69), die jeweils von zwei Stoßleisten (59, 61; 60, 62) der zusammengefügten Mutterhälften (58a, 58b) gebildet werden, sowie **durch** eine Sicherung der Klemmstücke (63) gegen Lösen **durch** an die Innenkanten (70, 71) der Klemmschenkel (64, 65) der Klemmstücke (63) angeformte dünne Stege (72, 73), die beim Aufschieben der Klemmstücke (63) auf die **durch** die Stoßleisten (59, 61; 60, 62) der beiden Mutterhälften (58a, 58b) gebildeten Federn (68, 69) mit Rillen (74, 75) in den Außenkanten (76) der Stoßleisten (59, 61; 60, 62) in Eingriff gelangen, wobei die Stege (72, 73) am Aufschiebeende (63a) der Klemmstücke (63) zur Bildung eines Anschlags (77) abgebrochen sind, der mit einem am Ende der Rillen (74, 75) in den Stoßleisten (59, 60; 61, 62) der Mutterhälften (58a, 58b) gebildeten Gegenanschlag (78) zur genauen Positionierung der Klemmstücke (63) beim Aufschieben derselben auf die Federn (68, 69) der zusammengefügten Mutterhälften (58a, 58b) und zur Sicherung der Klemmstücke (63) zusammenwirkt .

## Claims

1. Plastic swivel nut (58), which comprises two nut halves (58a, 58b) on a first structural part and is undetachably held on this, wherein the nut halves (58a, 58b) have an internal thread segment (50) and an inwardly directed annular shoulder segment (20a, 20b) for engaging on a corresponding collar (19) of the first structural part to be screwed to a second structural part, in particular for screwing the fitting housing (2) of a removal fitting (1) on the outlet connecting piece (16), which is provided with an external thread (18), of a plastic or metal transport and storage container (17) for liquids and bulk material, **characterised by** two nut halves (58a, 58b) with impact protection strips (59, 60; 61, 62) moulded on the ends, two clamping pieces (63) with a groove (67) formed by two clamping legs (64, 65) and a connecting web (66) to slide onto springs (68, 69), which are respectively formed by two impact protection strips (59, 61; 60, 62) of the joined nut halves (58a, 58b), and also by securing the clamping pieces (63) against release by thin webs (72, 73), which are moulded onto the inner edges (70, 71) of the clamping legs (64, 65) of the clamping pieces (63) and which come into engagement with grooves (74, 75) in the outer edges (76) of the impact protection strips (59, 61; 60, 62) when the clamping pieces (63) are slid onto the springs (68, 69) formed by the impact protection strips (59, 61; 60, 62) of the two nut halves (58a, 58b), wherein the webs (72, 73) are discontinued at the slide-on end (63a) of the clamping pieces (63) to form a stop (77), which cooperates with a counter-stop (78) formed at the end of the grooves (74, 75) in the impact protection strips (59, 60; 61, 62) of the nut halves (58a, 58b) for precise positioning of the clamping pieces (63) when these are slid onto the springs (68, 69) of the joined nut halves (58a, 58b) and for securing the clamping pieces (63).

## Revendications

1. Écrou-raccord ( 58 ) en matière plastique, qui est composé de deux moitiés ( 58a, 58b ) d'écrou sur une première pièce et est maintenu de manière imperdable sur cette pièce, sachant que les moitiés ( 58a, 58b ) d'écrou comportent un segment ( 50 ) à filetage intérieur et un segment ( 20a, 20b ) d'épaulement annulaire dirigé vers l'intérieur et destiné à attaquer un collet correspondant ( 19 ) de la première pièce à assembler par vissage avec une seconde pièce, en particulier pour visser le corps de robinetterie ( 2 ) d'une robinetterie de soutirage ( 1 ) sur le piquage de sortie ( 16 ), pourvu d'un filetage extérieur ( 18 ), d'une cuve ( 17 ) de transport et de stockage en matière plastique ou en métal pour des liquides et des produits en vrac,
**caractérisé par** deux moitiés ( 58a, 58b ) d'écrou pourvues de rebords ( 59, 60 ; 61, 62 ) d'assemblage formés aux extrémités,
par deux éléments ( 63 ) de serrage pourvus d'une rainure ( 67 ), formée par deux branches ( 64, 65 ) de serrage et une partie ( 66 ) de liaison, à enfiler sur des languettes ( 68, 69 ) qui sont respectivement formées par deux rebords ( 59, 60 ; 61, 62 ) d'assemblage des moitiés ( 58a, 58b ) d'écrou réunies,
et par un moyen pour bloquer les éléments ( 63 ) de serrage afin de les empêcher de se défaire, consistant en de minces nervures ( 72, 73 ), qui sont formées sur les arêtes intérieures ( 70, 71 ) des branches ( 64, 65 ) de serrage des éléments ( 63 ) de serrage et qui, lors de l'enfilage des éléments ( 63 ) de serrage sur les languettes ( 68, 69 ) formées par les rebords ( 59, 60 ; 61, 62 ) d'assemblage des deux moitiés ( 58a, 58b ) d'écrou, entrent en prise avec des gorges ( 74, 75 ) ménagées dans les arêtes extérieures ( 76 ) des rebords ( 59, 60 ; 61, 62 ) d'assemblage,
sachant que les nervures ( 72, 73 ) sont interrompues à l'extrémité ( 63a ) d'enfilage des éléments ( 63 ) de serrage, afin de former une butée ( 77 ) qui coopère avec une contrebutée ( 78 ), formée à l'extrémité des gorges ( 74, 75 ) ménagées dans les rebords ( 59, 60 ; 61, 62 ) d'assemblage des moitiés ( 58a, 58b ) d'écrou, pour le positionnement précis des éléments ( 63 ) de serrage lors de l'enfilage de ceux-ci sur les languettes ( 68, 69 ) des moitiés ( 58a, 58b ) d'écrou réunies et pour le blocage des éléments ( 63 ) de serrage.
